# EUROPÄISCHE PATENTSCHRIFT

(11) **EP 1 105 937 B1**
(45) Veröffentlichungstag und Bekanntmachung des Hinweises auf die Patenterteilung: **11.09.2002**
(21) Anmeldenummer: 99952134.7
(22) Anmeldetag: 04.05.1999
(51) Int. Cl.: H01R 4/00

(54) **DREHANSCHLUSS MIT MODULAREN BAUEINSÄTZEN**
TURNING CONNECTION HAVING MODULAR INSERTS
RACCORD TOURNANT A ELEMENTS RAPPORTES MODULAIRES

(30) Priorität: 15.05.1998 DE 29808801 U
(43) Veröffentlichungstag der Anmeldung: 13.06.2001
(73) Patentinhaber: KUKA Schweissanlagen GmbH, 86165 Augsburg (DE)
(72) Erfinder: KIKUT, Botho, D-86157 Augsburg (DE)
(74) Vertreter: Ernicke, Hans-Dieter, Dipl.-Ing.
(86) Internationale Anmeldenummer: EP9903021
(87) Internationale Veröffentlichungsnummer: WO99060667

(56) Entgegenhaltungen:
- DE-A1- 4 414 950
- DE-A1- 19 618 958
- US-A- 4 830 048
- US-A- 5 632 625

## Beschreibung

Die Erfindung betrifft einen Drehanschluß für den Anschluß eines Werkzeugs an der Hand eines Roboters mit den Merkmalen im Oberbegriff des Anspruches 1.

Ein für Roboter geeigneter Drehanschluss ist aus der DE-A-44 14 950 bekannt. Er besitzt einen oder mehrere Elektroanschlüsse und zusätzlich ein oder mehrere Fluidanschlüsse. Die Elektroanschlüsse sind als konventioneller zylindrischer Schleifringverbinder ausgebildet.

Die US-A-5,632,625 zeigt einen ähnlichen Drehanschluss. Aus der DE-A-196 18 958 ist eine modulare Bürsteneinsteckkassette für Elektromotoren des Kommutator-Typs bekannt. Die US-A-4,830,048 befasst sich mit einer drehbaren Elektroschalter- und Ventileinheit zur sequentiellen Beaufschlagung von mehreren drehbaren Arbeitsstationen.

Aus der Praxis ist noch ein anderer Drehanschluss für Roboter mit Elektro- und Fluidanschlüssen bekannt. Er besteht aus zwei gegenseitig drehbar gelagerten Anschlußplatten, die mit Bürsten und Schleifringen ausgerüstet sind. Die Elektroanschlüsse sind einzeln auf den Anschlußplatten montiert. Dies vergrößert den Bauaufwand, das Gewicht und den Montageaufwand. Außerdem ist der bekannte Drehanschluss relativ teuer.

Es ist daher Aufgabe der vorliegenden Erfindung, einen anderen, günstigeren Drehanschluß aufzuzeigen.

Die Erfindung löst diese Aufgabe mit den Merkmalen des Anspruchs 1.
Die Elektroanschlüsse sind beim erfindungsgemäßen Drehanschluß als modulare Baueinsätze ausgebildet, die die Bürsten mit allen Elektrofunktionen beinhalten und in vorbereiteten Ausnehmungen der zugehörigen Anschlußplatte positionierbar sind. In den Baueinsätzen werden dabei vorzugsweise alle zur jeweiligen Stromart gehörigen Bürsten und Leitungen zusammengefaßt. Vorzugsweise gibt es zwei Baueinsätze, einen für Kraftstrom, z.B. Schweißstrom, und einen für Schwachstrom, z.B. für Signal- und Steuerströme.

Die modularen Baueinsätze haben den Vorteil, daß sie eine standardisierte Größe und Ausbildung haben und leicht ausgetauscht werden können. Die Zahl der Teile wird verringet. Dementsprechend sinken die Montage- und Baukosten. Außerdem wird Gewicht gespart.

Die Baueinsätze sind vorzugsweise als Bogensegmente ausgebildet und können an der zugehörigen Anschlußplatte lösbar durch Schrauben oder dergleichen befestigt werden. Dies erleichtert den Austausch und die Wartung der modularen Baueinsätze. Zudem lassen sie sich mit ihren Bürsten besonders günstig positionieren. Die erfindungsgemäßen Baueinsätze haben durch ihre Funktionskonzentration eine kompakte Bauform. Dies erlaubt auch eine bessere Positionierbarkeit von zusätzlichen Fluidanschlüssen und weiteren Anschlüssen.

Für die bessere Stromübertragung haben die Baueinsätze vorzugsweise mehrere Bürsten pro Schleifringbahn. Dabei empfiehlt es sich für die Schwachstromübertragung, die Bürsten jeweils mit mehreren Kontaktfahnen auszurüsten. Dies ermöglicht die Übertragung von Bussignalen und weiteren Steuersignalen.

Durch den modularen Aufbau der Elektroanschlüsse und gegebenenfalls auch der Fluidanschlüsse können die Bürsten im wesentlichen in der gleichen Ebene wie die Fluidkanäle angeordnet sein. Dies spart Bauraum und insbesondere Bauhöhe, was der Roboterhand einen möglichst großen Bewegungsspielraum verschafft und die aufzunehmende Nutzlast des Roboters erhöht.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 :: einen Drehanschluß an einer Roboterhand mit einer Wechselkupplung für ein Werkzeug in abgebrochener Seitenansicht,
- Figur 2:: eine Draufsicht auf den Drehanschluß von der Roboterhand her gesehen und

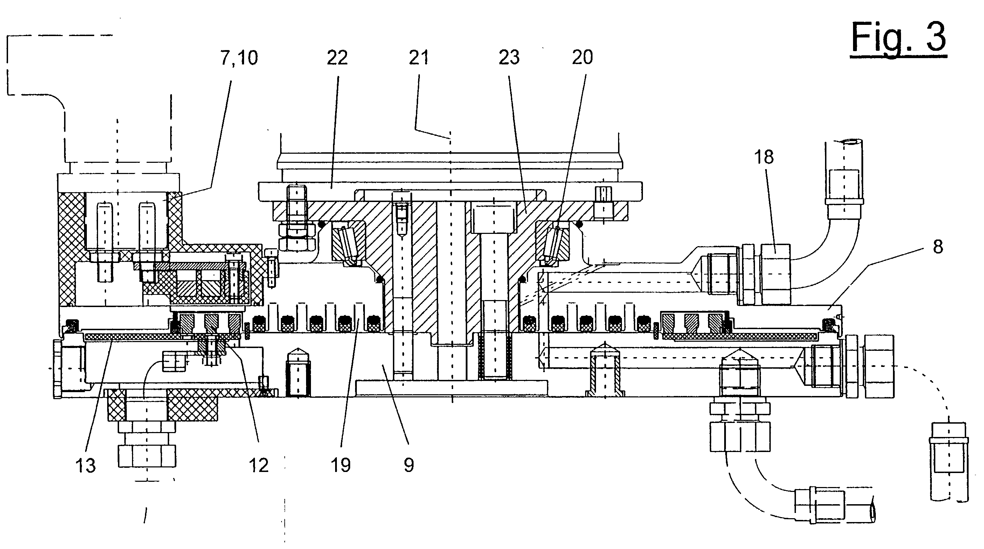

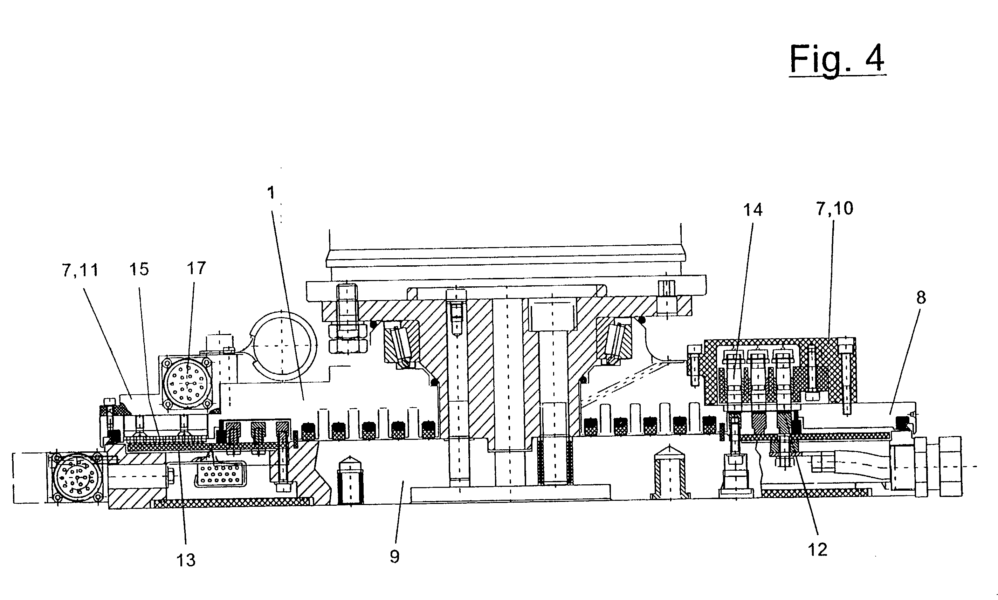

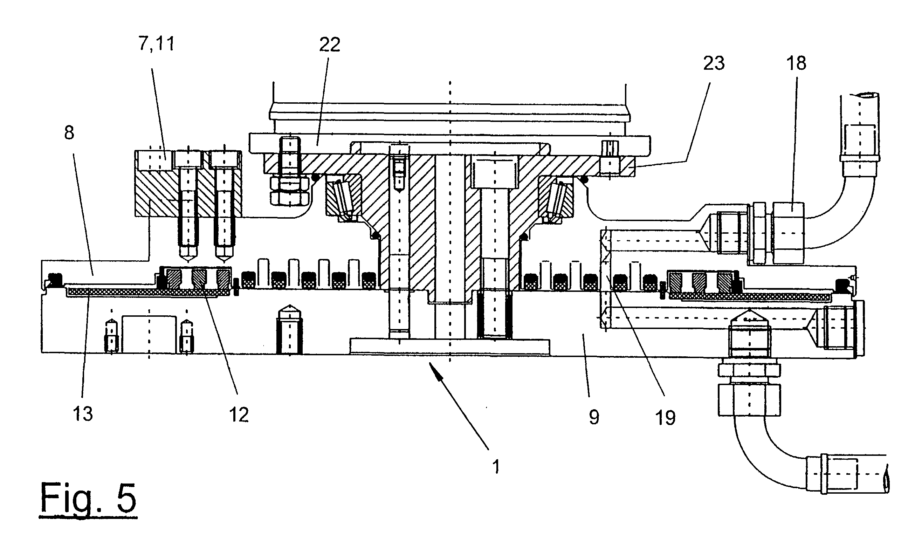

- Figur 3 bis 5.: verschiedene Radialschnitte durch den Drehanschluß.

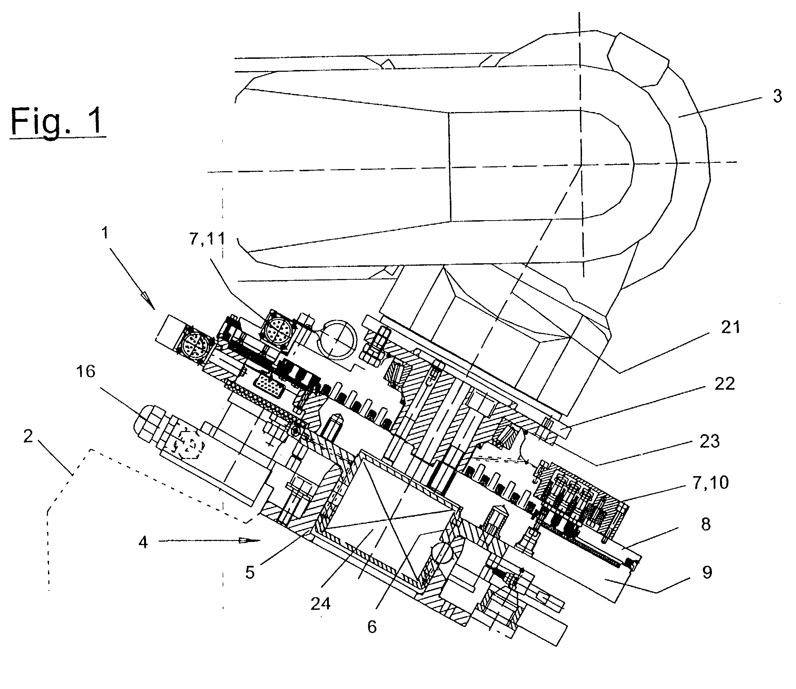

Figur 1 zeigt in Seitenansicht und in einer teilweise abgebrochenen Darstellung eine Roboterhand (3) eines mehrachsigen Industrieroboters, die an ihrem drehbaren Abtriebsflansch (22) einen Drehanschluß (1) aufweist. Der Drehanschluß (1) kann zusätzlich mit einer Wechselkupplung (4) zum fernsteuerbaren An- und Abkuppeln eines Werkzeuges (2) (gestrichelt angedeutet) ausgerüstet sein. Beim Ankuppeln des Werkzeuges (2) werden zugleich Verbindungen (16) für Strom, fluide Betriebsmittel etc. automatisch gekuppelt.

Die Übertragung der Ströme und der fluiden Betriebsmittel von außen auf auf den Drehanschluß (1) erfolgt in an sich bekannter Weise. Fluide Betriebsmittel können z.B. Kühlwasser, Hydrauliköl, Preßluft oder dergleichen sein. Stromübertragungen sind vorgesehen für Stark- oder Kraftstrom und für Schwachstrom. Starkstrom wird z.B. als Schweißstrom und für andere Zwecke eingesetzt. Schwachströme können z.B. Steuer- und Signalströme, aber auch beliebige andere niedrige Ströme mit niedriger Spannung sein. Das Werkzeug kann von beliebiger Art und Ausbildung sein. Es kann alternativ unter Wegfall der Wechselkupplung (4) auch direkt am Drehanschluß (1) befestigt werden.

Der Drehanschluß (1) besteht im wesentlichen aus zwei relativ zueinander drehbaren parallelen Anschlußplatten (8,9). Die Anschlußplatten (8,9) sind eng benachbart angeordnet und haben mit ihren einander zugekehrten Oberflächen eine schleifenden Kontakt. Die obere und zur Roboterhand (3) benachbarte Anschlußplatte (8) ist über ein Lager (20) drehbar an einer Durchführung (23) gelagert, mit der die untere Anschlußplatte (9) am Abtriebsflansch (22) der Roboterhand (3) befestigt ist. An der unteren Anschlußplatte (9) kann die Wechselkupplung (4) befestigt sein. Diese besteht z.B. aus einem roboterseitigen Kupplungsteil (6) und einem werkzeugseitigen Kupplungsteil (5), die miteinander über einen pneumatisch betätigbaren Schnellverschluß (24) drehfest gekuppelt werden können.

Der Drehanschluß (1) besitzt mehrere, vorzugsweise zwei Elektroanschlüsse (7) für Kraft- und Schwachströme. Er kann außerdem ein oder mehrere Fluidanschlüsse (18) aufweisen. Die Elektroanschlüsse (7) besitzen Schleifringe (12,13) und Bürsten (14,15). Die Fluidanschlüsse (18) haben ringförmige Fluidkanäle (19) und radiale Stichkanäle. Die Strom- und Fluidübertragung findet im Kontaktbereich der Anschlußplatten (8,9) statt, die dazu dicht zusammengehalten und randseitig sowie im inneren Plattenbereich mit geeigneten Dichtungen ausgerüstet sind.

Die Schleifringe (12,13) sind konzentrisch um die Abtriebsachse (21) an der Kontaktfläche der unteren Anschlußplatte (9) angeordnet, insbesondere eingebettet. Neben den Schleifringen (12,13) befinden sich mehrere ebenfalls konzentrische ringförmige Fluidkanäle (19). Die Schleifringe (12,13) sind vorzugsweise außen angeordnet. Die Schleifringe (12) sind für die Kraftstromübertragung und die Schleifringe (13) für die Schwachstromübertragung vorgesehen. Die Schleifringe (13) sind für eine kontaktsichere Stromübertragung in Layertechnik ausgeführt. Dies verringert auch den Bauaufwand und die Bauhöhe.

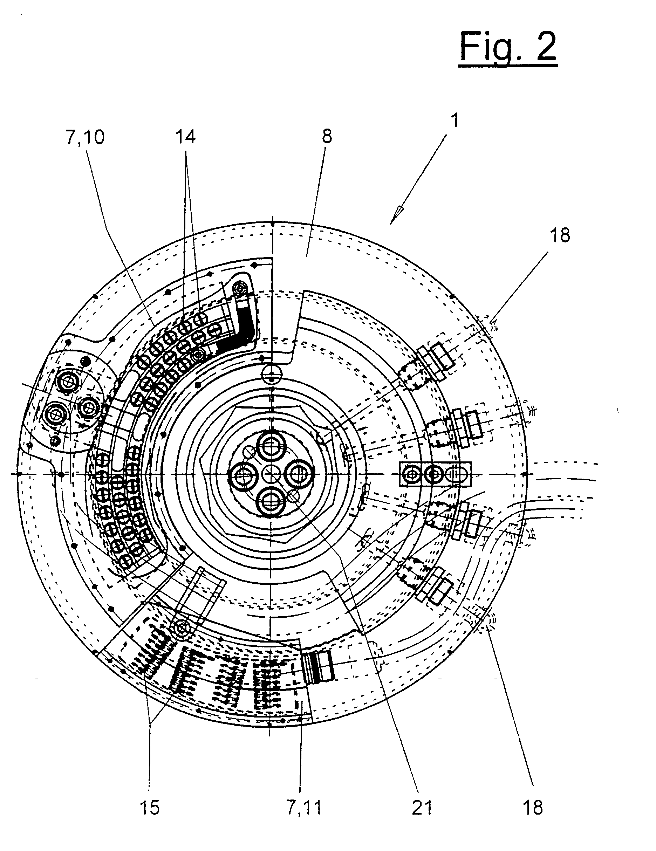

Die Bürsten (14,15) sind der oberen Anschlußplatte (8) zugeordnet. Diese ist über eine Drehmomentenstütze (nicht dargestellt) relativ drehfest gegenüber dem Gehäuse der Roboterhand (3) angeordnet. Die Bürsten (14,15) sind in mehreren, vorzugsweise zwei modularen Baueinsätzen (10,11) angeordnet und gegebenenfalls mit Dichtungen versehen. Dabei sind vorzugsweise die Bürsten (14) für die Kraftstromübertragung und die Bürsten (15) für die Schwachstromübertragung in separaten Baueinsätzen (10,11) angeordnet und mit all ihren Elektrofunktionen zusammengefaßt. Alternativ können für die Schwachstrom- und Starkstromübertragung auch mehrere modulare Baueinsätze vorhanden sein. Die Baueinsätze (10,11) sind räumlich getrennt am Drehanschluß (1) angeordnet. Wie Figur 2 verdeutlicht, liegen sie beispielsweise in Umfangsrichtung hintereinander. Zwischen den Baueinsätzen (10,11) können die Fluidanschlüsse (18) angeordnet sein.

Die modularen Baueinsätze (10,11) haben blockartige Gehäuse in einer kompakten Bauweise und werden in vorbereiteten Ausnehmungen der zugehörigen Anschlußplatte (8) positioniert. Sie sind vorzugsweise als Bogensegment ausgebildet und lassen sich an der Anschlußplatte (8) von außen her anschrauben. Die Baueinsätze (10,11) können durch ihre einheitliche Gestaltung ausgetauscht werden.

Die Baueinsätze (10,11) weisen ein oder mehrere Steckereinsätze (17) zum roboterseitigen Anschluß der weiterführenden Kabel auf. Hierbei können alternative Steckereinsätze (17) für wahlweise axialen oder radialen Kabelanschluß vorhanden sein.

Die Schleifringe (12,13) befinden sich vorzugsweise im wesentlichen in der gleichen Ebene wie die Fluidkanäle (19). Der Drehanschluß (1) baut dadurch sehr kompakt.

Die Bürsten (14,15) sind in geeigneter Weise ausgebildet. Die Baueinsätze (10,11) haben pro zugehöriger Schleifringbahn mindestens eine Bürste (14,15). Vorzugsweise sind jeweils mehrere Bürsten (14,15) vorhanden. Die für die Schwachstromübertragung vorgesehenen Bürsten (15) besitzen außerdem mehrere Kontaktfahnen. Dies erlaubt eine Busübertragung von Signalen.

Abwandlungen der Erfindung sind in verschiedener Weise möglich. So kann die Zuordnung von Bürsten und Schleifringen zu den Anschlußplatten des Drehanschlusses vertauscht sein. Ferner kann die Gestaltung und Zahl der Anschlußplatten variieren. Veränderlich ist ferner die Zahl und Ausbildung der Baueinsätze und deren Befestigung. Auch die Ausbildung der Bürsten kann variieren.

### BEZUGSZEICHENLISTE

- 1: Drehanschluß
- 2: Werkzeug
- 3: Roboter, Roboterhand
- 4: Wechselkupplung
- 5: Kupplungsteil, Werkzeug
- 6: Kupplungsteil, Roboter
- 7: Elektroanschluß
- 8: Anschlußplatte
- 9: Anschlußplatte
- 10: modularer Baueinsatz, Kraftstrom
- 11: modularer Baueinsatz, Steuerstrom
- 12: Schleifring, Kraftstrom
- 13: Schleifring, Steuerstrom
- 14: Bürsten, Kraftstrom
- 15: Bürsten, Steuerstrom
- 16: Verbindung
- 17: Steckereinsatz
- 18: Fluidanschluß
- 19: Fluidkanal
- 20: Lager
- 21: Abtriebsachse
- 22: Abtriebsflansch
- 23: Durchführung
- 24: Schnellverschluß

## Patentansprüche

1. Drehanschluß für den Anschluß eines Werkzeugs (2) an der Hand (3) eines Roboters, wobei der Drehanschluß (1) zumindest einen Elektroanschluß (7) mit zwei gegenseitig drehbar gelagerten Anschlußplatten (8,9) mit Bürsten (14,15) und Schleifringen (12,13) aufweist, **dadurch gekennzeichnet, daß** die Bürsten (14,15) in ein oder mehreren modularen Baueinsätzen (10,11) angeordnet sind, die in vorbereiteten Ausnehmungen der zugehörigen Anschlußplatte (8) positionierbar sind.

2. Drehanschluß nach Anspruch 1, **dadurch gekennzeichnet, daß** die Baueinsätze (10,11) austauschbar sind.

3. Drehanschluß nach Anspruch 1 oder 2, **dadurch gekennzeichnet, daß** die Baueinsätze (10,11) als Bogensegmente ausgebildet sind.

4. Drehanschluß nach Anspruch 1, 2 oder 3, **dadurch gekennzeichnet, daß** die Baueinsätze (10,11) an der zugehörigen Anschlußplatte (8) anschraubbar sind.

5. Drehanschluß nach Anspruch 1, 2, 3 oder 4, **dadurch gekennzeichnet, daß** die Baueinsätze (10,11) ein oder mehrere Steckereinsätze (17) aufweisen.

6. Drehanschluß nach Anspruch 5, **dadurch gekennzeichnet, daß** die Steckereinsätze (17) alternativ für einen axialen oder radialen Kabelanschluß ausgebildet sind.

7. Drehanschluß nach einem der Ansprüche 1 bis 6, **dadurch gekennzeichnet, daß** separate und räumlich getrennte Baueinsätze (10,11) für Kraft- und Schwachstrom, insbesondere Steuer- und Signalstrom, vorgesehen sind.

8. Drehanschluß nach einem der Ansprüche 1 bis 7, **dadurch gekennzeichnet, daß** die Baueinsätze (10,11) mehrere Bürsten (14,15) pro Schleifringbahn aufweisen.

9. Drehanschluß nach einem der Ansprüche 1 bis 8, **dadurch gekennzeichnet, daß** die Schleifringe (13) für den Schwachstrom in Layertechnik ausgeführt sind.

10. Drehanschluß nach einem der Ansprüche 1 bis 9, **dadurch gekennzeichnet, daß** die Bürsten (14,15) im wesentlichen in der gleichen Ebene wie die Fluidkanäle (19) eines parallelen Fluidanschlusses (18) angeordnet sind.

## Claims

1. Rotating connection for the connection of a tool (2) to the hand (3) of a robot, with the rotating connection (1) having at least one electrical connection (7) with two connecting plates (8, 9), which are mounted such that they can rotate with respect to one another and have brushes (14, 15) and slip rings (12, 13), **characterized in that** the brushes (14, 15) are arranged in one or more modular fittings (10, 11), which can be positioned in prepared recesses in the associated connecting plate (8).

2. Rotating connection according to Claim 1, **characterized in that** the fittings (10, 11) are interchangeable.

3. Rotating connection according to Claim 1 or 2, **characterized in that** the fittings (10, 11) are in the form of arc segments.

4. Rotating connection according to Claim 1, 2 or 3, **characterized in that** the fittings (10, 11) can be screwed to the associated connecting plate (8).

5. Rotating connection according to Claim 1, 2, 3 or 4, **characterized in that** the fittings (10, 11) have one or more plug inserts (17).

6. Rotating connection according to Claim 5, **characterized in that** the plug inserts (17) are designed alternatively for an axial or radial cable connection.

7. Rotating connection according to one of Claims 1 to 6, **characterized in that** separate and physically separated fittings (10, 11) are provided for heavy current and light current, in particular, control current and signal current.

8. Rotating connection according to one of Claims 1 to 7, **characterized in that** the fittings (10, 11) have a number of brushes (14, 15) per slip-ring track.

9. Rotating connection according to one of Claims 1 to 8, **characterized in that** the slip rings (13) for light current are designed using layer technology.

10. Rotating connection according to one of Claims 1 to 9, **characterized in that** the brushes (14, 15) are arranged essentially on the same plane as the fluid channels (19) for a parallel fluid connection (18).

## Revendications

1. Raccord tournant pour raccorder un outil (2) à la main (3) d'un robot, le raccord (1) tournant comportant au moins une connexion (7) électrique ayant deux plaques (8, 9) de connexion montées mutuellement tournantes et ayant des balais (14, 15) et des bagues (12, 13) collectrices, **caractérisé en ce que** les balais (14, 15) sont montés dans un insert ou dans plusieurs inserts (10, 11) modulaires, qui peuvent être mis en position dans des cavités préparées à l'avance de la plaque (8) associée de connexion.

2. Raccord tournant suivant la revendication 1, **caractérisé en ce que** les inserts (10, 11) peuvent être remplacés.

3. Raccord tournant suivant la revendication 1 ou 2, **caractérisé en ce que** les inserts (10, 11) sont constitués en segment d'arc.

4. Raccord tournant suivant la revendication 1, 2 ou 3, **caractérisé en ce que** les inserts peuvent être visés à la plaque (8) associée de connexion.

5. Raccord tournant suivant la revendication 1, 2, 3 ou 4, **caractérisé en ce que** les inserts (10, 11) ont un insert (17) ou plusieurs inserts (17) formant connecteur.

6. Raccord tournant suivant la revendication 5, **caractérisé en ce que** les inserts (17) formant connecteur sont constitués en alternance pour une connexion de câble axiale ou radiale.

7. Raccord tournant suivant l'une des revendications 1 à 6, **caractérisé en ce qu'**il est prévu des inserts (10, 11) distincts et séparés dans l'espace pour courant fort et courant faible, notamment pour courant de commande et courant de signal.

8. Raccord tournant suivant l'une des revendications 1 à 7, **caractérisé en ce que** les inserts (10, 11) ont plusieurs balais (14, 15) par piste de bague collectrice.

9. Raccord tournant suivant l'une des revendications 1 à 8, **caractérisé en ce que** les bagues (13) collectrices sont réalisées pour le courant faible en la technique par couche.

10. Raccord tournant suivant l'une des revendications 1 à 9, **caractérisé en ce que** les balais (14, 15) sont disposés sensiblement dans le même plan que les canaux (19) pour du fluide d'un raccord (18) parallèle pour du fluide.
